# EUROPEAN PATENT APPLICATION

(11) **EP 4 056 418 A1**
(43) Date of publication of application: **14.09.2022**
(21) Application number: 21161427.6
(22) Date of filing: 09.03.2021
(51) Int. Cl.: B60P 1/48

(54) **HOOKLIFT ARRANGEMENT, AND METHOD OF A HOOKLIFT ARRANGEMENT**

(71) Applicant: Hiab AB, 164 22 Kista (SE)
(72) Inventor: SIREN, Pasi, 216 10 Kirjala (FI); HYTTINEN, Hannu, 21200 Raisio (FI); VILKKA, Aleksi, 37140 Nokia (FI); NYSTRÖM, Mikko, 21290 Rusko (FI)
(74) Representative: Bjerkén Hynell KB

(57) **Abstract**

A hooklift arrangement (2) for loading and/or unloading a load carrying object (300) onto and off a vehicle (200), the hooklift arrangement (2) being structured to be mounted to the vehicle (200), the hooklift arrangement (2) comprising a lift arm (100) comprising a main section (109) arranged to pivot around an axis parallel to the plane of the chassis (103) of the vehicle, and a movable section (112) arranged to be attached to, and move relative to the main section (109) of the lift arm (100), the movable section (112) further comprising an attachment tool arranged to engage the load carrying object (300) during loading and unloading. The hooklift arrangement further comprises an actuator system (4) comprising at least a first actuator (104) controlling the pivot angle of the lift arm (100) and a second actuator controlling the movement of the movable section (112) relative to the main section (109) of the lift arm (100), and a sensor system (6) comprising sensor units configured to determine a pivot angle of the main section (109) relative to the chassis (103) of the vehicle, and a position of the moveable section (112) relative to the main section (109), and to generate sensor signals in dependence thereto, and a processing unit configured control the operation of the at least first and second actuators for loading and/or unloading the load carrying object (300) onto and off the vehicle (200). The processing unit is further configured to receive an automatic mode signal for entering an automatic mode, and in response of receipt of the automatic mode signal, the processing unit is configured to determine control signals to perform a synchronous movement of the lift arm (100) and movable section (112), such that the attachment tool is moved in a horizontal direction away from, or towards, the vehicle (300) in a predetermined height of the attachment tool relative to the vehicle.

## Description

### Technical field

The present disclosure relates to a hooklift arrangement, and method of a hooklift arrangement, and in particular a hooklift arrangement and a method applicable during loading and unloading a load carrying object, e.g. a container.

### Background

Hooklifts mounted to vehicles are often used for loading and unloading load carrying objects such as containers, flatbeds and dumpster bodies on the vehicle. Hooklifts are used in various applications such as recycling, waste-handling and transport of goods and objects.

Below some prior art documents will be briefly identified and discussed.

US5732835A discloses device on a crane for controlling the boom hoisting angle and the length of a wind-up rope to obtain a fixed value of its lift. The structure comprises a lift arm comprising a freely rotatable revolver frame and a boom. The boom has a wind-up rope arranged on it, comprising a hook at its tip on which a load can be suspended. The structure further comprises an actuator that drives the boom, driven by a hydraulic cylinder. The structure further comprises sensor such as hoisting angle sensor, rope length sensor and/or boom length sensor. A control unit further uses the sensor values to generate control signals to simultaneously output the boom control signal and the winch control signal.

JP2010070311A relates to a crane mounted on a vehicle comprising a column pivotable with respect to the axis parallel to the plane of the chassis and a boom having a hook attached on the one end. The crane further comprises hydraulic actuators for controlling the movement of the column and the boom. The crane further comprises detector for sensing the boom turning angle, boom length etc. and a microprocessor such that based on the data from the detector, the microprocessor controls the motion of the column and boom by controlling the hydraulic actuators for maintaining the height of the hook. JP5302602B2 discloses a crane overload prevention device wherein the crane is a mobile crane mounted on a vehicle. The crane comprises a column erected on the vehicle and is freely pivotable. The column supports a boom and a hook at the tip of the boom. Based on calculations, horizontal operation of the hook is performed by using at least one operation of telescopic operation or boom operation of the boom in combination with the rotational operation of the winch. The control signals for movement of the hook in horizontal direction are based on the calculation by the calculating unit that calculated the work amount based on various parameters and their placements.

US5257177A discloses an apparatus for controlling the movement of hydraulically movable work equipment and a path control arrangement. The work equipment of the prior art can be a hook of a mobile crane. The work equipment is arranged at the end of a length-adjustable and pivotable arm. The arrangement further comprises a system of actuators or drive units for changing the length of the arm and for pivoting of the arm. The system further comprises sensors like position sensors which ascertain the length of the arm and its angle in relation to a predetermined plane. Depending on the input control signals, a substantially linear movement path is constructed for the work equipment. The system further comprises a processing unit that generates the signals for movement of the drive units. The system can also have an automatic mode of operation based on the commands delivered from the operating device.

DE102015215917A1 discloses a structure for swap bodies for a load transport vehicle with movement variation and procedure for it. The structure can be a hooklift or a skip vehicle, comprising a base frame and at least one movable cantilever arm relative to the base frame for unloading and/or tilting a container.

US3084807A discloses a derrick device for handling loading and unloading of goods. The derrick device can be a hook lift arrangement. The hook lift comprises a mast onto which the derrick is mounted and pivoted so as to be able of changing its inclination with respect to the deck. The derrick is provided with combined means where it is possible to simultaneously change the inclination of the derrick as well as operate the winch and pulley system to move the hook along a horizontal or practically horizontal plane.

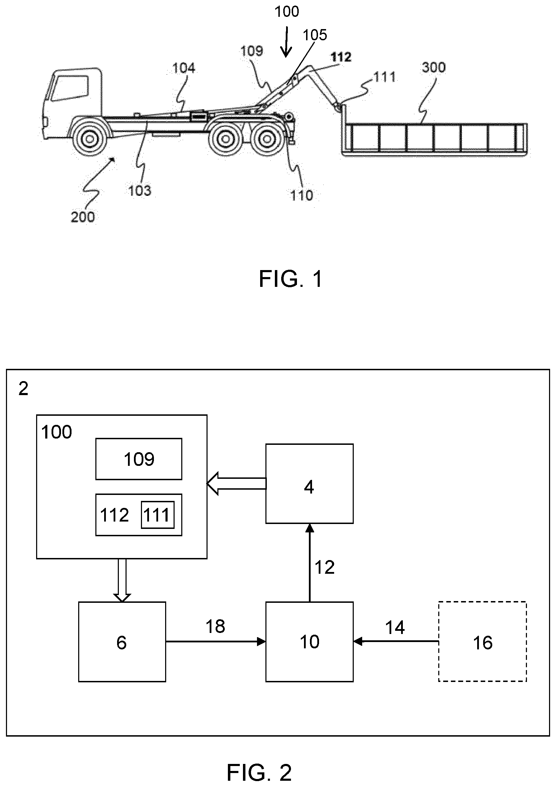

A vehicle provided with a hooklift arrangement is illustrated in figure 1. The hooklift arrangement typically comprises a pair of mechanically connected hydraulic cylinders, here referred to as the main cylinders, which is controlling the angle of a main section 109, e.g. a main lift arm with reference to the load bed 103 of the chassis of the vehicle. The main lift arm may further comprise a movable section 112, such as a telescopic part that is movable in relation to the main section, to which the hook 111 is attached to. A hydraulic cylinder, e.g. a sliding cylinder, controls the extension position of the telescopic part with the hook.

One particular application of the hooklift is to load and unload load carrying objects to and from truck trailers. The load bed of the truck and the trailer are typically at the same height and when using the hooklift to push a load carrying object to or off the trailer with the hooklift it is important to keep the hook at the same height allowing the load carrying object to be slided on and supported by the trailer. There are further other similar examples when unloading and/or loading load carrying objects to and from platforms or stands that have a horizontal surface at a certain height above ground level.
Keeping the hook at the essentially same height during movement of the load carrying object is a difficult task when manually controlling the movement via an operator module.

The lower front edge of the load carrying object must not be too far from the level of e.g. the trailer as the angle between the load carrying object and the trailer will then be too big which results in that it will be difficult to control the movement. On the other hand, the angle must not be too small, in that the underside of the load carrying object may then not run smoothly above the level of the load bed of the trailer. An exemplary range of heights determined between the lower front edge of the load carrying object and the upper horizontal surface of the trailer is 0.1 - 0.3 meter based upon long time experience by skilled operators.

To be able to keep a constant height of the hook during the operation the operator of the hooklift needs to simultaneously control the user input instructions to both the main cylinders controlling the angle of the main lift arm and also the cylinder controlling the extension position of the telescopic par. Thus, it is considered a difficult task to keep a smooth movement throughout the loading or unloading operation and requires a lot of experience of the operator in order to perform a safe operation.

Thus, an object of the present invention is to achieve a solution that reduces the complexity from the operator's point of view and allows less experienced operators to perform the trailer loading and unloading operations.

### Summary

The above-mentioned objects are achieved by the present invention according to the independent claims.

Preferred embodiments are set forth in the dependent claims.

The present invention is based on an automatic trailer operation functionality for hooklifts that is applicable to load and unload a load carrying object, e.g. a container, to/from e.g. a trailer, a platform or a loading dock. In brief, the functionality is a control feature where a first and a second actuator of a lift arm are automatically operated in a controlled and synchronous fashion in order to achieve a trajectory of the hook at a constant height which is required for loading or unloading a load carrying object to or from a trailer or loading dock.

The advantages of the hooklift arrangement and the method according to embodiments of the present invention are that it is less processing heavy compared to real-time height monitoring, and also makes things like anticipation/prediction of forthcoming movements to increase accuracy easier.

### Brief description of the drawings

Figure 1 is a schematic illustration of a vehicle provided with a hooklift arrangement according to the present invention.
Figure 2 is a block diagram schematically illustrating the hooklift arrangement according to the present invention.
Figure 3 illustrates an unloading procedure performed by the hooklift arrangement according to the present invention.
Figure 4 is a graph illustrating one embodiment of the present invention.
Figure 5 is flow diagram illustrating the method according to the present invention.

### Detailed description

The hooklift arrangement will now be described in detail with references to the appended figures. Throughout the figures the same, or similar, items have the same reference signs. Moreover, the items and the figures are not necessarily to scale, emphasis instead being placed upon illustrating the principles of the invention.

First with references to figures 1 and 2, a hooklift arrangement 2 for loading and/or unloading a load carrying object 300 onto and off a vehicle 200 will be described in detail. The load carrying object 300 may e.g. be a container, a flatbed, or a dumpster body.

The hooklift arrangement 2 being structured to be mounted to the vehicle 200.

The hooklift arrangement 2 comprises a lift arm 100 that in turn comprises a main section 109 arranged to pivot around an axis parallel to the plane of a chassis 103 of the vehicle, i.e. a load bed, and a movable section 112 arranged to be attached to, and move relative to the main section 109 of the lift arm 100, e.g. by a telescopic and/or tilting movement. The movable section 112 further comprises an attachment tool 111, such as a hook, arranged to engage the load carrying object 300 during loading and unloading. The load carrying often comprises a bar, or a similar item, to which the attachment tool can engage.

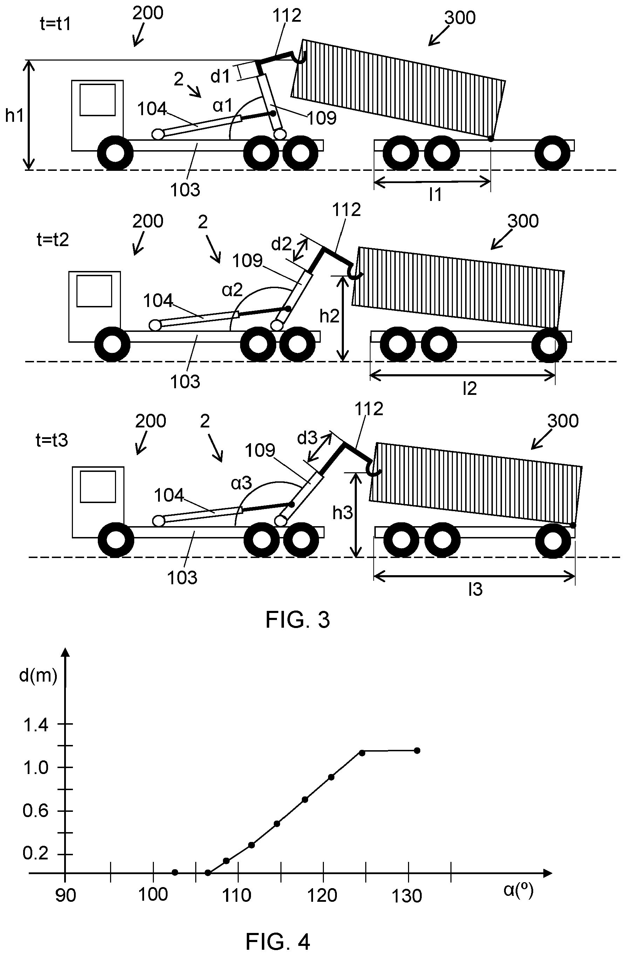

The hooklift arrangement also comprises an actuator system 4 comprising at least a first actuator 104 controlling the pivot angle α (see figure 3) of the lift arm 100 relative to the plane of the chassis 103 of the vehicle and a second actuator 105 controlling the movement of the movable section 112 relative to the main section 109 of the lift arm 100. The actuator system is typically based on hydraulics, and comprises hydraulic cylinders and valves for controlling the hydraulic cylinders. As an alternative the actuator system may comprise electric actuators.

The hooklift arrangement further comprises a sensor system 6, and a processing unit 10.

The sensor system 6 comprises sensor units, such as rope sensors and angle sensors, configured to determine a pivot angle of the main section 109 relative to the chassis 103 of the vehicle, and a position of the moveable section 112 relative to the main section 109, and also to generate sensor signals 8 in dependence thereto. In figure 2, the measured parameters are schematically represented by a block arrow.
The angle α is shown in the exemplary illustration in figure 3 where it is designated α1, α2, and α3 during the course of unloading at different times t1, t2, and t3, respectively. Corresponding positions of the moveable section relative to the main section are designated by "d", in figure 3, d1, d2, and d3, respectively.

The sensor system 6 may further comprise additional sensor units such as radar, LIDAR and image acquisition units to monitor and detect objects in the working area of the hooklift arrangement. These types of sensors may further be used to detect an object such as the load carrying object 300 to be loaded to the vehicle, and the position of the load carrying object's attachment means, such as a bar, to which the attachment tool 111, e.g. a hook, of the lift arm is arranged to engage. The sensor units may also be used to detect a position of a platform, a trailer (see figure 3) or a loading dock that the load carrying object should be unloaded to. The height position of the horizontal surface of the platform, trailer or loading dock may in such a manner be determined by the sensor system.

The processing unit 10 is configured to receive the generated sensor signals 8, and to determine and generate control signals 12 controlling the operation of the at least first and second actuators of the actuator system 4 for loading and/or unloading the load carrying object 300 onto and off the vehicle 200. The actuation of the lift arm 100 is schematically represented by a block arrow in figure 2.

The processing unit 10 may be a single processing unit such as a programmable logic controller (PLC), or a system of processing units to which the processing functionality according to the invention is distributed.

The processing unit 10 is further configured to receive an automatic mode signal 14 for entering an automatic mode. The automatic mode signal 14 may optionally be generated by an operator control unit 16, which is illustrated in figure 2.

In response of receipt of the automatic mode signal 14, the processing unit 10 is configured to determine control signals 12 adapted to control the operation of the at least first and second actuators 104, 105 to perform a synchronous movement of the lift arm 100 and the movable section 112, such that the attachment tool 111 is moved in a horizontal direction away from, or towards, the vehicle 300 in a predetermined height of the attachment tool relative to the vehicle.

The expression horizontal direction may by defined as parallel to the level of the vehicle, i.e. the level of the upper surface of the chassis (i.e. the load bed), or parallel to the level of the trailer or platform where the load carrying object should be arranged. The horizontal direction may also be defined in relation to gravity or the ground. The level or inclination of the trailer may be determined by the sensor system using e.g. camera sensors and/or distance sensors. If there is a deviation between the level of the load bed and the level of the trailer, the movement of the attachment tool should preferably be parallel to the level of the trailer.

According to one embodiment, the control signals 12 are determined based on a set of predetermined and pairwise concurrent positions of the lift arm 100, relative to the chassis of the vehicle 200, and the movable section 112, relative to the main section 109 of the lift arm 100, that keep the attachment tool 111 in the predetermined height.

According to another embodiment of the hooklift arrangement the control signals 12 are determined based on defining a future position of the lift arm 100, relative to the chassis 103, i.e. the upper surface of the chassis, e.g. the load bed, of the vehicle, and calculating the position of the movable section 112, relative to the main section 109 of the lift arm, in order for the attachment tool 111 to remain at the predetermined height while moving in a horizontal direction.

As an alternative, the control signals 12 are determined based on defining a future position of the movable section 112, relative to the main section 109 of the lift arm, and calculating the position of the lift arm 100, relative to the chassis 103, i.e. the upper surface of the chassis, e.g. the load bed, of the vehicle, in order for the attachment tool 111 to remain at the predetermined height while moving in a horizontal direction.

According to another embodiment the processing unit 10 is configured to determine the predetermined height by using one of a number of different options.
In one option, the predetermined height may be determined based on user input, e.g. via an operator control unit 16.
Another option is to determine the predetermined height by detecting and determining the height of an object related to the load carrying object 300 based upon the sensor signals 8. The object may be a trailer, or a loading ramp.
Still another option is to determine the predetermined height by applying at least one stored value accessible to the processing unit 10.

According to one further embodiment, the automatic mode signal 14 is generated as a step in an automatic operation program further comprising other automatically performed operations of the hooklift arrangement. The automatic operation program may cover the entire loading or unloading procedure, e.g. for an unloading procedure, the entire procedure starting with the load carrying object being on a loaded position on the vehicle until the load carrying object has been moved to the intended position on e.g. the trailer. The automatic mode may then be a part of this procedure.

As discussed above, and according to a further embodiment, the hooklift arrangement also comprises an operator control unit 16 and wherein the automatic mode signal 14 is generated in response to a selection made by the operator via the operator control unit 16.

With reference to figure 1 the invention also comprises a vehicle 200 provided with a hooklift arrangement 300 as described above.

The present invention also relates to a method in hooklift arrangement 2 for loading and/or unloading a load carrying object 300 onto and off a vehicle 200, where the hooklift arrangement being structured to be mounted to the vehicle.

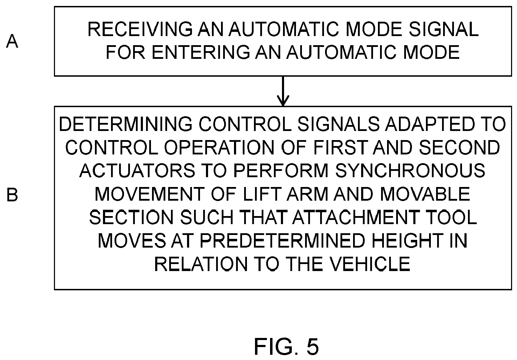

The hooklift arrangement has been described in detail above and it is here referred to that description. Thus, the hooklift arrangement comprises a lift arm 100 comprising a main section 109 arranged to pivot around an axis parallel to the plane of the chassis 103 of the vehicle, and a movable section 112 arranged to be attached to, and move relative to (such as in a telescopic and/or tilting movement) the main section 109 of the lift arm. The movable section 112 further comprises an attachment tool 111 arranged to engage the load carrying object 300 during loading and unloading.
The hooklift arrangement also comprises an actuator system 4, a sensor system 6, and a processing unit 10 as described above.
The processing unit 10 configured to receive the sensor signals, and to determine and generate control signals 12 controlling the operation of the at least first and second actuators 104, 105 for loading and/or unloading the load carrying object 300 onto and off the vehicle.
The method is schematically illustrated by the flow diagram of figure 5, and comprises:
A - receiving an automatic mode signal 14 for entering an automatic mode, and
B - in response of receiving the automatic mode signal 14, determining control signals 12 adapted to control the operation of the at least first and second actuators to perform a synchronous movement of the lift arm 100 and movable section 112, such that the attachment tool 111 moves in a horizontal direction away from, or towards, the vehicle in a predetermined height of the attachment tool 111 relative to the vehicle 200.

In a further embodiment the method comprises determining the control signals 12 based on a set of predetermined and pairwise concurrent positions of the lift arm 100, relative to the chassis 103 of the vehicle, and the movable section 112, relative to the main section 109 of the lift arm, that keep the attachment tool 111 in the predetermined height. This has also been discussed in detail above in connection with the description of the hooklift arrangement.

In another embodiment the method comprises determining the control signals 12 based on defining a future position of:
- the lift arm 100, relative to the chassis 103 of the vehicle, and calculating the position of the movable section 112, relative to the main section 109 of the lift arm, in order for the attachment tool 111 to remain at the predetermined height while moving in a horizontal direction, or
- the movable section 112, relative to the main section 109 of the lift arm, and calculating the position of the lift arm 100, relative to the chassis 103 of the vehicle, in order for the attachment tool 111 to remain at the predetermined height while moving in a horizontal direction.

In still a further embodiment the method comprises determining the predetermined height based on user input, or determining the predetermined height by detecting and determining the height of an object related to the load carrying object 300 based upon said sensor signals 8, or determining the predetermined height by applying at least one stored value accessible to the processing unit 10. This has also been discussed above and it is referred to that description.

The method preferably comprises generating the automatic mode signal 14 as a step in an automatic operation program further comprising other automatically performed operations of the hooklift arrangement. As an alternative, the method comprises generating the automatic mode signal 14 in response to a selection made by the operator on an operator control unit 16.

In figure 3 is schematically illustrated snapshots at three points in time t; t1, t2 and t3 of a hooklift arrangement according to the invention during an unloading procedure of a container to a trailer.

At time t1 the first phase of the unloading of the container has been performed by the pivot movement of the main lift arm.
The hooklift arrangement has entered into the automatic mode at t2, where the moveable section 112 has further moved a distance from d1 to d2 in addition to the movement of the lift arm from the angle α1 to α2. The distance from the front end of the trailer to the position where the lower back edge of the load carrying object 300 rest on the upper surface of the trailer is designated 11.

At time t2 the hook is at a height h2 which is lower than the previous h1, and as can be seen at the later point in time t3 this height is kept constant as h2=h3 while the back end of the container has moved horizontally towards the far end of the trailer as 13>12. This horizontal movement at a constant height is due to the fact that the movable section has extended further from d2 to d3 concurrently with increasing the pivot angle of the lift arm from α2 to α3.

The movement that is desired, when unloading or loading a load carrying object from a vehicle to or from a platform at a certain height, is that the load carrying object needs to be pushed or pulled along the horizontal surface of the trailer, platform or load dock. This is illustrated in figure 3.

The control signals may be determined based on a set of predetermined and pairwise concurrent positions of the lift arm, relative to the chassis of the vehicle, and the movable section, relative to the main section of the lift arm, that keep the attachment tool in the predetermined height.

As an example illustrated by the graph in figure 4, the set may comprise a plurality of pairwise concurrent positions and further points may be interpolated by the processer unit in between these defined points. Each set of predetermined and pairwise concurrent positions of the lift arm and the movable section corresponds to a particular height of the attachment tool. In figure 4 the Y-axis designates the extension d of the movable section 112 in relation to the main section 109. The X-axis is the angle α between the main section and the chassis (the load bed) of the vehicle.

One or a plurality of sets covering different heights of the attachment tool may be stored in a memory accessible to the controller.

The set(s) of pairwise concurrent placements may be stored in the memory of the processing unit at the factory, as a part of the assembly of the hooklift arrangement, or be calculated on the field by the processing unit based on e.g. the geometry of the hook-lift assembly, a height of the attachment tool and/or the distance that the movable part should be able to move. I.e. by including parameters that may be updated in accordance with the application by the operator. The predetermined set(s) may hence be calculated or updated in response to operator input (or sensor input) to adapt to the current application.

Further, the processing unit may calculate additional sets corresponding to other heights of the attachment tool based on the stored sets. By working with stored sets of positions, the requirements on real-time processing power of the processing unit is reduced.

As an alternative to storing predetermined sets of pairwise and concurrent positions of the lift arm and movable section, they may be determined based on the current or a defined future position of one of the lift arm and the movable section and calculating the position of the other, given that the attachment tool should be or remain at the predetermined height while moving in a horizontal direction and further known properties of the geometry of the hooklift arrangement and its installation on the vehicle.

As an example using the graph in figure 4, if the angle α of the lift arm is 110°, it is possible to calculate that the movable part should extend to a position at a distance d of approximately 0.25m in order to keep the predetermined height h. This alternative creates more flexibility in customizing the system to different heights of the attachment tool.

The automatic mode signal may be generated as a step in an automatic operation program further comprising other automatically performed operations of the hooklift arrangement.

As an example, other automatically performed operations may be unlocking or locking the locks keeping the load carrying object secured to the chassis of the vehicle, initiation of the unloading of the load carrying object from the vehicle by pivoting the lift arm from a fully loaded position towards the cabin of the truck towards the back of the truck. The automatic mode signal may be generated, as an example, in response to the pivoting angle of the lift arm reaching a position where the attachment tool is at the predetermined height. This would be the position where the position of the movable part needs to be adjusted in order to keep the attachment tool at the predetermined height while moving it in the horizontal direction.

The automatic mode signal may, as an alternative, be generated by the processer unit in response of receiving a selection signal indicating that the operator has selected the automatic mode of the hooklift arrangement through interaction with the operator control unit, such as a maneuvering device, manual control unit (wired or wireless), joystick, touch display, key board etc. When the processing unit has entered the automatic mode of operation of the hooklift arrangement, the operator may further control the direction (to move away or towards the vehicle along the horizontal direction) by indicating this by interaction with operator control unit. The operator control unit may further be arranged as a means for the operator to control the speed of the horizontal movement of the attachment tool.

Parameters controlling to the automatic mode of the hooklift arrangement may be further input to the processing unit by the operator through the operator control unit. As an example, the predetermined height may be input, or selected from a set of predetermined alternatives, by the operator using the operator control unit. In combination, or as an alternative, parameters describing the maximum extent of the horizontal movement and the maximum tilt angle of the lift arm may be entered to set boundaries for the automatic movement.

Setting a maximum tilt angle will e.g. ensure that the lift arm is not pressed into the platform to which a load carrying object is unloaded to and the setting a parameter for the maximum extent of the horizontal movement will make sure that the load carrying object is not pushed too far on the platform.

As alternatives to having the predetermined height determined based on input from the operator through the operator control unit, the predetermined height may be determined based on signals from sensors estimating the height of the horizontal platform. By knowing the type of the load carrying object to be unloaded and the distance from the bottom part of the load carrying object to its engagement means, the predetermined height may be deduced. The placement of the attachment tool when engaging with the engagement means of the load carrying object in a loading process may also be stored as a predetermined height. Yet another alternative may be to have the predetermined height as a stored value accessible to the operator control unit. This is a viable option if the height is a standardized height used for the main part of the unloading and loading operations.

The determined and generated control signals may further include control signals for controlling the position of the vehicle to which the hooklift arrangement is mounted. The control signals are in that case transmitted to the control system of the vehicle through a common interface. The movements of the hooklift arrangement and the vehicle may in that case be further coordinated by the processing unit of the hooklift arrangement to perform an efficient and safe unloading or loading process.
According to one embodiment the hooklift arrangement is powered on, or when a parameter that affects the automatic mode (such as a geometry parameter, or a height setting) is modified, the processing unit is configured to calculate the pairwise coordinates. In the illustrated example in figure 4, once the angle α reaches 106°, the processing unit knows this is where the movable section needs to start moving out (i.e. the automatic procedure is initiated). In other words, the height is not being actively monitored.
It could be beneficial to monitor the height during the whole operation, even before the automatic unloading/loading operation starts, so that e.g. a synchronous tilting feature of the movable section could be initiated in order to achieve the same height as the trailer operation, making these two features more "seamless". The initiation may be performed during power up of the system according to the prevailing parameters, but may also be performed at a later stage.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A hooklift arrangement (2) for loading and/or unloading a load carrying object (300) onto and off a vehicle (200), the hooklift arrangement (2) being structured to be mounted to the vehicle (200), the hooklift arrangement (2) comprising:
- a lift arm (100) comprising:
- a main section (109) arranged to pivot around an axis parallel to the plane of the chassis (103) of the vehicle, and
- a movable section (112) arranged to be attached to, and move relative to the main section (109) of the lift arm (100), the movable section (112) further comprising an attachment tool (111) arranged to engage the load carrying object (300) during loading and unloading,
- an actuator system (4) comprising at least a first actuator (104) controlling the pivot angle of the lift arm (100) relative to the plane of the chassis (103) of the vehicle and a second actuator (105) controlling the movement of the movable section (112) relative to the main section (109) of the lift arm (100),
- a sensor system (6) comprising sensor units, such as rope sensors and angle sensors, configured to determine a pivot angle of the main section (109) relative to the chassis (103) of the vehicle, and a position of the moveable section (112) relative to the main section (109), and to generate sensor signals (8) in dependence thereto,
- a processing unit (10) configured to receive said generated sensor signals (8), and to determine and generate control signals (12) controlling the operation of the at least first and second actuators for loading and/or unloading the load carrying object (300) onto and off the vehicle (200), **characterized in that** the processing unit (10) is further configured to receive an automatic mode signal (14) for entering an automatic mode, and in response of receipt of the automatic mode signal (14), the processing unit (10) is configured to determine control signals (12) adapted to control the operation of the at least first and second actuators (104, 105) to perform a synchronous movement of the lift arm (100) and movable section (112), such that the attachment tool (111) is moved in a horizontal direction away from, or towards, the vehicle (300) in a predetermined height of the attachment tool relative to the vehicle.

2. The hooklift arrangement (2) of claim 1, wherein the control signals (12) are determined based on a set of predetermined and pairwise concurrent positions of the lift arm (100), relative to the chassis of the vehicle (200), and the movable section (112), relative to the main section (109) of the lift arm (100), that keep the attachment tool (111) in the predetermined height.

3. The hooklift arrangement (2) of claim 1, wherein the control signals (12) are determined based on defining a future position of:
- the lift arm (100), relative to the chassis (103) of the vehicle, and calculating the position of the movable section (112), relative to the main section (109) of the lift arm, in order for the attachment tool (111) to remain at the predetermined height while moving in a horizontal direction, or
- the movable section (112), relative to the main section (109) of the lift arm, and calculating the position of the lift arm (100), relative to the chassis (103) of the vehicle, in order for the attachment tool (111) to remain at the predetermined height while moving in a horizontal direction.

4. The hooklift arrangement (2) of any of claims 1-3, wherein said processing unit (10) is configured to determine the predetermined height based on user input, or to determine the predetermined height by detecting and determining the height of an object related to the load carrying object (300) based upon said sensor signals (8), or to determine the predetermined height by applying at least one stored value accessible to the processing unit (10).

5. The hooklift arrangement (2) of any of claims 1-4, wherein the automatic mode signal (14) is generated as a step in an automatic operation program further comprising other automatically performed operations of the hooklift arrangement.

6. The hooklift arrangement (2) of any of claims 1-4, further comprising an operator control unit (16) and wherein the automatic mode signal (14) is generated in response to a selection made by the operator via the operator control unit (16).

7. A vehicle (200) comprising a hooklift arrangement (300) according to any of claims 1-6.

8. A method in hooklift arrangement (2) for loading and/or unloading a load carrying object (300) onto and off a vehicle (200), the hooklift arrangement being structured to be mounted to the vehicle, the hooklift arrangement comprising:
- a lift arm (100) comprising:
- a main section (109) arranged to pivot around an axis parallel to the plane of the chassis (103) of the vehicle, and
- a movable section (112) arranged to be attached to, and move relative to the main section (109) of the lift arm, the movable section (112) further comprising an attachment tool (111) arranged to engage the load carrying object (300) during loading and unloading,
- an actuator system (4) comprising at least a first actuator (104) controlling the pivot angle of the lift arm (100) relative to the plane of the chassis of the vehicle and a second actuator (105) controlling the movement of the movable section (112) relative to the main section (109) of the lift arm,
- a sensor system (6) comprising sensor units, such as rope sensors and angle sensors, configured to determine a pivot angle of the main section (109) relative to the chassis of the vehicle, and a position of the moveable section (112) relative to the main section (109), and to generate sensor signals (8) in dependence thereto,
- a processing unit (10) configured to receive said sensor signals, and to determine and generate control signals (12) controlling the operation of the at least first and second actuators (104, 105) for loading and/or unloading the load carrying object (300) onto and off the vehicle, **characterized in that** the method comprises:
A - receiving an automatic mode signal (14) for entering an automatic mode, and
B - in response of receiving the automatic mode signal (14), determining control signals (12) adapted to control the operation of the at least first and second actuators to perform a synchronous movement of the lift arm (100) and movable section (112), such that the attachment tool (111) moves in a horizontal direction away from, or towards, the vehicle in a predetermined height of the attachment tool (111) relative to the vehicle (200).

9. The method according to claim 8, comprising determining the control signals (12) based on a set of predetermined and pairwise concurrent positions of the lift arm (100), relative to the chassis (103) of the vehicle, and the movable section (112), relative to the main section (109) of the lift arm, that keep the attachment tool (111) in the predetermined height.

10. The method according to claim 8, comprising determining the control signals (12) based on defining a future position of:
- the lift arm (100), relative to the chassis (103) of the vehicle, and calculating the position of the movable section (112), relative to the main section (109) of the lift arm, in order for the attachment tool (111) to remain at the predetermined height while moving in a horizontal direction, or
- the movable section (112), relative to the main section (109) of the lift arm, and calculating the position of the lift arm (100), relative to the chassis (103) of the vehicle, in order for the attachment tool (111) to remain at the predetermined height while moving in a horizontal direction.

11. The method according to any of claims 8-10, comprising determining the predetermined height based on user input, or determining the predetermined height by detecting and determining the height of an object related to the load carrying object (300) based upon said sensor signals (8), or determining the predetermined height by applying at least one stored value accessible to the processing unit (10).

12. The method according to any of claims 8-11, wherein the method comprises generating the automatic mode signal (14) as a step in an automatic operation program further comprising other automatically performed operations of the hooklift arrangement.

13. The method according to any of claims 8-11, wherein the method further comprises generating the automatic mode signal (14) in response to a selection made by the operator on an operator control unit (16).
